# EUROPEAN PATENT SPECIFICATION

(11) **EP 3 434 731 B1**
(45) Date of publication and mention of the grant of the patent: **09.06.2021**
(21) Application number: 17770024.2
(22) Date of filing: 13.03.2017
(51) Int. Cl.: C08L 45/00, C08F 32/08, C08K 5/00, C08K 5/06

(54) **RESIN COMPOSITION, RESIN FILM, AND ELECTRONIC DEVICE**
HARZZUSAMMENSETZUNG, HARZFOLIE UND ELEKTRONISCHES BAUELEMENT
COMPOSITION DE RÉSINE, FILM DE RÉSINE ET COMPOSANT ÉLECTRONIQUE

(30) Priority: 23.03.2016 JP 2016058334
(43) Date of publication of application: 30.01.2019
(73) Proprietor: Zeon Corporation, Tokyo 100-8246 (JP)
(72) Inventor: OSAKU, Yumi, Tokyo 100-8246 (JP)
(74) Representative: Maiwald Patent- und Rechtsanwaltsgesellschaft mbH
(86) International application number: PCT/JP2017/010002
(87) International publication number: WO 2017/163981

(56) References cited:
- WO-A1-2010/110323
- WO-A1-2014/027618
- WO-A1-2015/033879
- CN-A- 1 609 085
- JP-A- 2006 265 322
- JP-A- 2006 307 155
- JP-A- 2010 224 533
- JP-A- 2012 171 993

## Description

### TECHNICAL FIELD

The present invention relates to a resin composition, to a resin film obtained using said resin composition and to the use of said resin film for making an electronic device. More particularly the present invention relates to a resin composition able to give a resin film enabling formation of an electrode with a low resistance value when forming an electrode such as an ITO electrode and excellent in transparency, to a resin film obtained using said resin composition and to the use of said resin film for making an electronic device.

### BACKGROUND ART

Electronic devices such as display devices, integrated circuit devices, solid imaging devices, color filters, and black matrices are provided with various resin films such as protective films for preventing deterioration or damage, flattening films of boards having devices or interconnects for flattening relief due to devices or interconnects, and electrical insulating films for maintaining electrical insulation. Devices such as thin film transistor type liquid crystal display devices and integrated circuit devices are provided with resin films as interlayer insulating films for insulating among pluralities of interconnects arranged in layers. Further, as the constitution of an organic EL device and light emitting device, a constitution including an anode/hole injection-transport layer/organic light emitting layer/electron injection-layer/cathode is general. Around the light emitting parts, for electrically insulating from other devices and interconnects, pixel separation films (also called "pixel defining films" and "device separation films") are provided. Between the active devices such as transistors and the anodes, flattening films are provided. Furthermore, a display device having a touch panel structure is provided with a resin film as an interlayer insulating film for electrically insulating electrodes between pairs of such electrodes. In the past, various resin compositions have been used as materials for forming these resin films.

In the past, as the resin materials for forming these resin films, thermosetting resin materials such as epoxy resin have been generally used. In recent years, along with the increasingly higher density of interconnects and devices, development of a new resin material enabling fine patterning and excellent in electrical characteristics such as a low dielectric property has been sought for these resin materials as well.

To deal with these demands, for example, Patent Document 1 discloses a resin composition comprising a cyclic olefin polymer having a protonic polar group, a cross-linking agent having an epoxy group, a cross-linking agent having a triazine structure or glycoluril structure and having at least one type of functional group selected from the group comprising an imino group, methylol group, and alkoxybutyl group, and a radiation-sensitive compound.

### CITATION LIST

### PATENT DOCUMENTS

Patent Document 1: Japanese Patent Publication No. 2010-224533A

### SUMMARY OF INVENTION

### PROBLEM TO BE SOLVED BY THE INVENTION

On the other hand, in recent years, when forming an electrode such as an ITO electrode on the surface of an insulating resin film obtained using such a resin composition, improving the formability of the ITO electrode to thereby lower the resistance value of the electrode such as the ITO electrode or further raising the transparency as an insulating resin film has been sought.

In response to such demands, an object of the present invention is to provide a resin composition able to give a resin film enabling formation of an electrode with a low resistance value when forming an electrode such as an ITO electrode and further excellent in transparency.

### MEANS FOR SOLVING THE PROBLEM

For achieving the above object, the present inventor studied a resin composition comprising a cyclic olefin polymer having a protonic polar group, a cross-linking agent, and diethylene glycol ethyl methyl ether as an organic solvent. During the studies, the present inventor took note of and studied the low boiling point constituents contained in the diethylene glycol ethyl methyl ether as the organic solvent, specifically, diethylene glycol dimethyl ether, whereupon the present inventor discovered that by reducing the content of such a low boiling point constituent of diethylene glycol dimethyl ether to a specific ratio, it is possible to obtain a resin film excellent in transparency and further able to lower the resistance value when forming an electrode such as an ITO electrode and thereby completed the present invention.

That is, according to the present invention, there are provided:
[1] A resin composition comprising a cyclic olefin polymer (A) having a protonic polar group, a cross-linking agent (B), and an organic solvent (C), wherein
   the organic solvent (C) contains diethylene glycol ethyl methyl ether, and a content of diethylene glycol dimethyl ether contained in the organic solvent (C) is 10 ppm by weight or less when a content of the diethylene glycol ethyl methyl ether is 100 wt%,
[2] The resin composition according to [1] wherein a content of the diethylene glycol dimethyl ether in the resin composition as a whole is 10 ppm by weight or less,
[3] The resin composition according to [1] or [2], wherein the cross-linking agent (B) is an epoxy compound,
[4] The resin composition according to any one of [1] to [3], further comprising a phenol-based antioxidant,
[5] The resin composition according to any one of [1] to [4], further comprising a radiation-sensitive compound,
[6] The resin film obtained using the resin composition according to any one of [1] to [5], and
[7] Use of a resin film according to [6] for making an electronic device.

### EFFECTS OF INVENTION

According to the present invention as claimed in the appended claims, it is possible to provide a resin composition able to give a resin film enabling formation of an electrode with a low resistance value when forming an electrode such as an ITO electrode and excellent in transparency, a resin film obtained using such a resin composition, and the use of such a resin composition for making an electronic device.

### DESCRIPTION OF EMBODIMENTS

The resin composition of the present invention is a resin composition comprising a cyclic olefin polymer (A) having a protonic polar group, a cross-linking agent (B), and an organic solvent (C), wherein
the organic solvent (C) contains diethylene glycol ethyl methyl ether, and a content of diethylene glycol dimethyl ether contained in the organic solvent (C) is 10 ppm by weight or less when a content of the diethylene glycol ethyl methyl ether is 100 wt%.

### (Cyclic Olefin Polymer Having Protonic Polar Group (A))

As the cyclic olefin polymer having a protonic polar group (A) (below, simply referred to as the "cyclic olefin polymer (A)") used in the present invention, a polymer of one or more cyclic olefin monomers or a copolymer of one or more cyclic olefin monomers and a monomer which can copolymerize with them may be mentioned, but in the present invention, as the monomer for forming the cyclic olefin polymer (A), it is preferable to use at least a cyclic olefin monomer which has a protonic polar group (a).

Here, the "protonic polar group" means a group which contains an atom belonging to Group XV or Group XVI of the Periodic Table to which a hydrogen atom directly bonds. Among the atoms belonging to Group XV or Group XVI of the Periodic Table, atoms belonging to Period 1 or Period 2 of Group XV or Group XVI of the Periodic Table are preferable, an oxygen atom, nitrogen atom, or sulfur atom is more preferable, and an oxygen atom is particularly preferable.

As specific examples of such a protonic polar group, a hydroxyl group, carboxy group (hydroxycarbonyl group), sulfonic acid group, phosphoric acid group, and other polar groups which have oxygen atoms; primary amino group, secondary amino group, primary amide group, secondary amide group (imide group), and other polar groups which have nitrogen atoms; a thiol group and other polar groups which have sulfur atoms; etc. may be mentioned. Among these as well, ones which have oxygen atoms are preferable, carboxy group is more preferable.

In the present invention, the number of protonic polar groups which bond with the cyclic olefin resin which has protonic polar groups is not particularly limited. Further, different types of protonic polar groups may also be included.

As specific examples of the cyclic olefin monomer which has a protonic polar group (a) (below, suitably called the "monomer (a)"), 2-hydroxycarbonylbicyclo[2.2.1]hept-5-ene, 2-methyl-2-hydroxycarbonylbicyclo[2.2.1]hept-5-ene, 2-carboxymethyl-2-hydroxycarbonylbicyclo[2.2.1]hept-5-ene, 2,3-dihydroxycarbonylbicyclo[2.2.1]hept-5-ene, 2-hydroxycarbonyl-3-hydroxycarbonylmethylbicyclo[2.2.1]hept-5-ene, 3-methyl-2-hydroxycarbonylbicyclo[2.2.1]hept-5-ene, 3-hydroxymethyl-2-hydroxycarbonylbicyclo[2.2.1]hept-5-ene, 2-hydroxycarbonyltricyclo[5.2.1.0^{2,6}]deca-3,8-diene, 4-hydroxycarbonyltetracyclo[6.2.1.1^{3,6}.0^{2,7}]dodec-9-ene, 4-methyl-4-hydroxycarbonyltetracyclo[6.2.1.1^{3,6}.0^{2,7}]dodec-9-ene, 4, 5-dihydroxycarbonyltetracyclo[6.2.1.1^{3,6}.0^{2,7}]dodec-9-ene, 4-carboxymethyl-4-hydroxycarbonyltetracyclo[6.2.1.1^{3,6}.0^{2,7}]dodec-9-ene, N-(hydroxycarbonylmethyl)bicyclo[2.2.1]hept-5-ene-2,3-dicarboxyimide, N-(hydroxycarbonylethyl)bicyclo[2.2.1]hept-5-ene-2,3-dicarboxyimide, N-(hydroxycarbonylpentyl)bicyclo[2.2.1]hept-5-ene-2,3-dicarboxyimide, N-(dihydroxycarbonylethyl)bicyclo[2.2.1]hept-5-ene-2,3-dicarboxyimide, N-(dihydroxycarbonylpropyl)bicyclo[2.2.1]hept-5-ene-2,3-dicarboxyimide, N-(hydroxycarbonylphenethyl)bicyclo[2.2.1]hept-5-ene-2,3-dicarboxyimide, N-(hydroxycarbonylphenethyl)bicyclo[2.2.1]hept-5-ene-2,3-dicarboxyimide, N-(2-(4-hydroxyphenyl)-1-(hydroxycarbonyl)ethyl)bicyclo[2.2.1]hept-5-ene-2,3-dicarboxyimide, N-(hydroxycarbonylphenyl)bicyclo[2.2.1]hept-5-ene-2,3-dicarboxyimide, and other carboxy group-containing cyclic olefins; 2-(4-hydroxyphenyl)bicyclo[2.2.1]hept-5-ene, 2-methyl-2-(4-hydroxyphenyl)bicyclo[2.2.1]hept-5-ene, 4-(4-hydroxyphenyl)tetracyclo[6.2.1.1^{3,6}.0^{2,7}]dodec-9-ene, 4-methyl-4-(4-hydroxyphenyl)tetracyclo[6.2.1.1^{3,6}.0^{2,7}]dodec-9-ene, 2-hydroxybicyclo[2.2.1]hept-5-ene, 2-hydroxymethylbicyclo[2.2.1]hept-5-ene, 2-hydroxyethylbicyclo[2.2.1]hept-5-ene, 2-methyl-2-hydroxymethylbicyclo[2.2.1]hept-5-ene, 2,3-dihydroxymethylbicyclo[2.2.1]hept-5-ene, 2-(hydroxyethoxycarbonyl)bicyclo[2.2.1]hept-5-ene, 2-methyl-2-(hydroxyethoxycarbonyl)bicyclo[2.2.1]hept-5-ene, 2-(1-hydroxy-1-trifluoromethyl-2,2,2-trifluoroethyl)bicyclo[2.2.1]hept-5-ene, 2-(2-hydroxy-2-trifluoromethyl-3,3,3-trifluoropropyl)bicyclo[2.2.1]hept-5-ene, 3-hydroxytricyclo[5.2.1.0^{2,6}]deca-4,8-diene, 3-hydroxymethyltricyclo[5.2.1.0^{2,6}]deca-4,8-diene, 4-hydroxytetracyclo[6.2.1.1^{3,6}.0^{2,7}]dodec-9-ene, 4-hydroxymethyltetracyclo[6.2.1.1^{3,6}.0^{2,7}]dodec-9-ene, 4,5-dihydroxymethyltetracyclo[6.2.1.1^{3,6}.0^{2,7}]dodec-9-ene, 4-(hydroxyethoxycarbonyl)tetracyclo[6.2.1.1^{3,6}.0^{2,7}]dodec-9-ene, 4-methyl-4-(hydroxyethoxycarbonyl)tetracyclo[6.2.1.1^{3,6}.0^{2,7}]dodec-9-ene, N-(hydroxyethyl)bicyclo[2.2.1]hept-5-ene-2,3-dicarboxyimide, N-(hydroxyphenyl)bicyclo[2.2.1]hept-5-ene-2,3-dicarboxyimide, and other hydroxyl group-containing cyclic olefins etc. may be mentioned. Among these as well, from the viewpoint of the adhesion of the obtained insulating film becoming higher, carboxy group-containing cyclic olefins are preferable, while 4-hydroxycarbonyltetracyclo[6.2.1.1^{3,6}.0^{2,7}]dodec-9-ene is particularly preferable. These monomers (a) may respectively be used alone or may be used as two types or more combined.

In the cyclic olefin polymer (A), the ratio of content of the units of the monomer (a) is preferably 10 to 90 mol% with respect to all monomer units, more preferably 20 to 80 mol%, still more preferably 30 to 70 mol%. By controlling ratio of content of the units of the monomer (a) in the above range, it is possible to improve the strength and the insulating property when made into the resin film while making the cyclic olefin polymer (A) sufficient in solubility in an organic solvent.

Further, the cyclic olefin polymer (A) used in the present invention may be a copolymer which is obtained by copolymerization of a cyclic olefin monomer which has a protonic polar group (a) and a monomer (b) which can copolymerize with this. As such a copolymerizable monomer (b), a cyclic olefin monomer which has a polar group other than a protonic polar group (b1), a cyclic olefin monomer which does not have a polar group (b2), and a monomer other than a cyclic olefin (b3) (below, suitably called the "monomer (b1)", "monomer (b2)", and "monomer (b3)") may be mentioned.

As the cyclic olefin monomer which has a polar group other than a protonic polar group (b1), for example, a cyclic olefin which has an N-substituted imide group, ester group, cyano group, or halogen atom may be mentioned.

As a cyclic olefin which has an N-substituted imide group, for example, a monomer represented by the following formula (1) or a monomer represented by the following formula (2) may be mentioned.

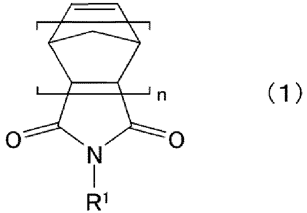

(In the above formula (1), R¹ indicates a hydrogen atom or alkyl group having 1 to 16 carbon atoms or aryl group. "n" indicates an integer of 1 to 2.)

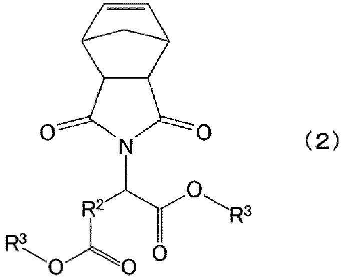

(In the above formula (2), R² indicates a bivalent alkylene group having 1 to 3 carbon atoms, while R³ indicates a monovalent alkyl group having 1 to 10 carbon atoms or a monovalent halogenated alkyl group having 1 to 10 carbon atoms.)

In the above formula (1), R¹ is an alkyl group having 1 to 16 or aryl group. As specific examples of the alkyl group, a methyl group, ethyl group, n-propyl group, n-butyl group, n-pentyl group, n-hexyl group, n-heptyl group, n-octyl group, n-nonyl group, n-decyl group, n-undecyl group, n-dodecyl group, n-tridecyl group, n-tetradecyl group, n-pentadecyl group, n-hexadecyl group, and other straight chain alkyl groups; cyclopropyl group, cyclobutyl group, cyclopentyl group, cyclohexyl group, cycloheptyl group, cyclooctyl group, cyclononyl group, cyclodecyl group, cycloundecyl group, cyclododecyl group, norbornyl group, bornyl group, isobornyl group, decahydronaphthyl group, tricyclodecanyl group, adamantyl group, and other cyclic alkyl groups; 2-propyl group, 2-butyl group, 2-methyl-1-propyl group, 2-methyl-2-propyl group, 1-methylbutyl group, 2-methylbutyl group, 1-methylpentyl group, 1-ethylbutyl group, 2-methylhexyl group, 2-ethylhexyl group, 4-methylheptyl group, 1-methylnonyl group, 1-methyltridecyl group, 1-methyltetradecyl group, and other branched alkyl groups; etc. may be mentioned. Further, as specific examples of the aryl group, a benzyl group etc. may be mentioned. Among these as well, due to the more excellent heat resistance and solubility in a polar solvent, an alkyl group having 6 to 14 carbon atoms and aryl group are preferable, while an alkyl group having 6 to 10 carbon atoms and aryl group are more preferable. If the number of carbon atoms is 4 or less, the solubility in a polar solvent is inferior, while if the number of carbon atoms is 17 or more, there is the problem that the heat resistance is inferior.

As specific examples of the monomer represented by the above formula (1), bicyclo[2.2.1]hept-5-ene-2,3-dicarboxyimide, N-phenyl-bicyclo[2.2.1]hept-5-ene-2,3-dicarboxyimide, N-methylbicyclo[2.2.1]hept-5-ene-2,3-dicarboxyimide, N-ethylbicyclo[2.2.1]hept-5-ene-2,3-dicarboxyimide, N-propylbicyclo[2.2.1]hept-5-ene-2,3-dicarboxyimide, N-butylbicyclo[2.2.1]hept-5-ene-2,3-dicarboxyimide, N-cyclohexylbicyclo[2.2.1]hept-5-ene-2,3-dicarboxyimide, N-adamantylbicyclo[2.2.1]hept-5-ene-2,3-dicarboxyimide, N-(1-methylbutyl)-bicyclo[2.2.1]hept-5-ene-2,3-dicarboxyimide, N-(2-methylbutyl)-bicyclo[2.2.1]hept-5-ene-2,3-dicarboxyimide, N-(1-methylpentyl)-bicyclo[2.2.1]hept-5-ene-2,3-dicarboxyimide, N-(2-methylpentyl)-bicyclo[2.2.1]hept-5-ene-2,3-dicarboxyimide, N-(1-ethylbutyl)-bicyclo[2.2.1]hept-5-ene-2,3-dicarboxyimide, N-(2-ethylbutyl)-bicyclo[2.2.1]hept-5-ene-2,3-dicarboxyimide, N-(1-methylhexyl)-bicyclo[2.2.1]hept-5-ene-2,3-dicarboxyimide, N-(2-methylhexyl)-bicyclo[2.2.1]hept-5-ene-2,3-dicarboxyimide, N-(3-methylhexyl)-bicyclo[2.2.1]hept-5-ene-2,3-dicarboxyimide, N-(1-butylpentyl)-bicyclo[2.2.1]hept-5-ene-2,3-dicarboxyimide, N-(2-butylpentyl)-bicyclo[2.2.1]hept-5-ene-2,3-dicarboxyimide, N-(1-methylheptyl)-bicyclo[2.2.1]hept-5-ene-2,3-dicarboxyimide, N-(2-methylheptyl)-bicyclo[2.2.1]hept-5-ene-2,3-dicarboxyimide, N-(3-methylheptyl)-bicyclo[2.2.1]hept-5-ene-2,3-dicarboxyimide, N-(4-methylheptyl)-bicyclo[2.2.1]hept-5-ene-2,3-dicarboxyimide, N-(1-ethylhexyl)-bicyclo[2.2.1]hept-5-ene-2,3-dicarboxyimide, N-(2-ethylhexyl)-bicyclo[2.2.1]hept-5-ene-2,3-dicarboxyimide, N-(3-ethylhexyl)-bicyclo[2.2.1]hept-5-ene-2,3-dicarboxyimide, N-(1-propylpentyl)-bicyclo[2.2.1]hept-5-ene-2,3-dicarboxyimide, N-(2-propylpentyl)-bicyclo[2.2.1]hept-5-ene-2,3-dicarboxyimide, N-(1-methyloctyl)-bicyclo[2.2.1]hept-5-ene-2,3-dicarboxyimide, N-(2-methyloctyl)-bicyclo[2.2.1]hept-5-ene-2,3-dicarboxyimide, N-(3-methyloctyl)-bicyclo[2.2.1]hept-5-ene-2,3-dicarboxyimide, N-(4-methyloctyl)-bicyclo[2.2.1]hept-5-ene-2,3-dicarboxyimide, N-(1-ethylheptyl)-bicyclo[2.2.1]hept-5-ene-2,3-dicarboxyimide, N-(2-ethylheptyl)-bicyclo[2.2.1]hept-5-ene-2,3-dicarboxyimide, N-(3-ethylheptyl)-bicyclo[2.2.1]hept-5-ene-2,3-dicarboxyimide, N-(4-ethylheptyl)-bicyclo[2.2.1]hept-5-ene-2,3-dicarboxyimide, N-(1-propylhexyl)-bicyclo[2.2.1]hept-5-ene-2,3-dicarboxyimide, N-(2-propylhexyl)-bicyclo[2.2.1]hept-5-ene-2,3-dicarboxyimide, N-(3-propylhexyl)-bicyclo[2.2.1]hept-5-ene-2,3-dicarboxyimide, N-(1-methylnonyl)-bicyclo[2.2.1]hept-5-ene-2,3-dicarboxyimide, N-(2-methylnonyl)-bicyclo[2.2.1]hept-5-ene-2,3-dicarboxyimide, N-(3-methylnonyl)-bicyclo[2.2.1]hept-5-ene-2,3-dicarboxyimide, N-(4-methylnonyl)-bicyclo[2.2.1]hept-5-ene-2,3-dicarboxyimide, N-(5-methylnonyl)-bicyclo[2.2.1]hept-5-ene-2,3-dicarboxyimide, N-(1-ethyloctyl)-bicyclo[2.2.1]hept-5-ene-2,3-dicarboxyimide, N-(2-ethyloctyl)-bicyclo[2.2.1]hept-5-ene-2,3-dicarboxyimide, N-(3-ethyloctyl)-bicyclo[2.2.1]hept-5-ene-2,3-dicarboxyimide, N-(4-ethyloctyl)-bicyclo[2.2.1]hept-5-ene-2,3-dicarboxyimide, N-(1-methyldecyl)-bicyclo[2.2.1]hept-5-ene-2,3-dicarboxyimide, N-(1-methyldodecyl)-bicyclo[2.2.1]hept-5-ene-2,3-dicarboxyimide, N-(1-methylundecyl)-bicyclo[2.2.1]hept-5-ene-2,3-dicarboxyimide, N-(1-methyldodecyl)-bicyclo[2.2.1]hept-5-ene-2,3-dicarboxyimide, N-(1-methyltridecyl)-bicyclo[2.2.1]hept-5-ene-2,3-dicarboxyimide, N-(1-methyltetradecyl)-bicyclo[2.2.1]hept-5-ene-2,3-dicarboxyimide, N-(1-methylpentadecyl)-bicyclo[2.2.1]hept-5-ene-2,3-dicarboxyimide, N-phenyl-tetracyclo[6.2.1.1^{3,6}.0^{2,7}]dodec-9-ene-4,5-dicarboxyimide, N-(2,4-dimethoxyphenyl)-tetracyclo[6.2.1.1^{3,6}.0^{2,7}]dodec-9-ene-4,5-dicarboxyimide, etc. may be mentioned. Note that, these may respectively be used alone or may be used as two types or more combined.

On the other hand, in the above formula (2), R² is a bivalent alkylene group having 1 to 3 carbon atoms. As the bivalent alkylene group having 1 to 3 carbon atoms, a methylene group, ethylene group, propylene group, and isopropylene group may be mentioned. Among these as well, due to the excellent polymerization activity, a methylene group and ethylene group are preferable.

Further, in the above formula (2), R³ is a monovalent alkyl group having 1 to 10 carbon atoms or monovalent halogenated alkyl group having 1 to 10 carbon atoms. As the monovalent alkyl group having 1 to 10 carbon atoms, for example, a methyl group, ethyl group, propyl group, isopropyl group, butyl group, sec-butyl group, tert-butyl group, hexyl group, cyclohexyl group, etc. may be mentioned. As the monovalent halogenated alkyl group having 1 to 10 carbon atoms, for example, a fluoromethyl group, chloromethyl group, bromomethyl group, difluoromethyl group, dichloromethyl group, difluoromethyl group, trifluoromethyl group, trichloromethyl group, 2,2,2-trifluoroethyl group, pentafluoroethyl group, heptafluoropropyl group, perfluorobutyl group, perfluoropentyl group, etc. may be mentioned. Among these as well, since the solubility in a polar solvent is excellent, as R³, a methyl group or ethyl group is preferable.

Note that, the monomer represented by the above formulas (1) and (2) can, for example, be obtained by an amidization reaction between a corresponding amine and 5-norbornene-2,3-dicarboxylic acid anhydride. Further, the obtained monomer can be efficiently isolated by separating and refining the reaction solution of the amidization reaction by a known method.

As the cyclic olefin which has an ester group, for example, 2-acetoxybicyclo[2.2.1]hept-5-ene, 2-acetoxymethylbicyclo[2.2.1]hept-5-ene, 2-methoxycarbonylbicyclo[2.2.1]hept-5-ene, 2-ethoxycarbonylbicyclo[2.2.1]hept-5-ene, 2-propoxycarbonylbicyclo[2.2.1]hept-5-ene, 2-butoxycarbonylbicyclo[2.2.1]hept-5-ene, 2-cyclohexyloxycarbonylbicyclo[2.2.1]hept-5-ene, 2-methyl-2-methoxycarbonylbicyclo[2.2.1]hept-5-ene, 2-methyl-2-ethoxycarbonylbicyclo[2.2.1]hept-5-ene, 2-methyl-2-propoxycarbonylbicyclo[2.2.1]hept-5-ene, 2-methyl-2-butoxycarbonylbicyclo[2.2.1]hept-5-ene, 2-methyl-2-cyclohexyloxycarbonylbicyclo[2.2.1]hept-5-ene, 2-(2,2,2-trifluoroethoxycarbonyl)bicyclo[2.2.1]hept-5-ene, 2-methyl-2-(2,2,2-trifluoroethoxycarbonyl)bicyclo[2.2.1]hept-5-ene, 2-methoxycarbonyltricyclo[5.2.1.0^{2,6}]dec-8-ene, 2-ethoxycarbonyltricyclo [5.2.1.0^{2,6}]dec-8-ene, 2-propoxycarbonyltricyclo[5.2.1.0^{2,6}]dec-8-ene, 4-acetoxytetracyclo[6.2.1.1^{3,6}.0^{2,7}]dodec-9-ene, 4-methoxycarbonyltetracyclo[6.2.1.1^{3,6}.0^{2,7}]dodec-9-ene, 4-ethoxycarbonyltetracyclo[6.2.1.1^{3,6}.0^{2,7}]dodec-9-ene, 4-propoxycarbonyltetracyclo[6.2.1.1^{3,6}.0^{2,7}]dodec-9-ene, 4-butoxycarbonyltetracyclo[6.2.1.1^{3,6}.0^{2,7}]dodec-9-ene, 4-methyl-4-methoxycarbonyltetracyclo[6.2.1.1^{3,6}.0^{2,7}]dodec-9-ene, 4-methyl-4-ethoxycarbonyltetracyclo[6.2.1.1^{3,6}.0^{2,7}]dodec-9-ene, 4-methyl-4-propoxycarbonyltetracyclo[6.2.1.1^{3,6}.0^{2,7}]dodec-9-ene, 4-methyl-4-butoxycarbonyltetracyclo[6.2.1.1^{3,6}.0^{2,7}]dodec-9-ene, 4- (2,2,2-trifluoroethoxycarbonyl) tetracyclo[6.2.1.1^{3,6}.0^{2,7}]dodec-9-ene, 4-methyl-4-(2,2, 2-trifluoroethoxycarbonyl) tetracyclo[6.2.1.1^{3,6}.0^{2,7}]dodec-9-ene, etc. may be mentioned.

As the cyclic olefin which has a cyano group, for example, 4-cyanotetracyclo[6.2.1.1^{3,6}.0^{2,7}]dodec-9-ene, 4-methyl-4-cyanotetracyclo[6.2.1.1^{3,6}.0^{2,7}]dodec-9-ene, 4,5-dicyanotetracyclo[6.2.1.1^{3,6}.0^{2,7}]dodec-9-ene, 2-cyanobicyclo [2.2.1] hept-5-ene, 2-methyl-2-cyanobicyclo[2.2.1]hept-5-ene, 2,3-dicyanobicyclo[2.2.1]hept-5-ene, etc. may be mentioned.

As the cyclic olefin which has an acid anhydride group, for example, tetracyclo[6.2.1.1^{3,6}.0^{2,7}]dodec-9-ene-4, 5-dicarboxylic anhydride, bicyclo[2.2.1]hept-5-ene-2,3-dicarboxylic anhydride, 2-carboxymethyl-2-hydroxycarbonylbicyclo[2.2.1]hept-5-ene anhydride, etc. may be mentioned.

As the cyclic olefin which has a halogen atom, for example, 2-chlorobicyclo[2.2.1]hept-5-ene, 2-chloromethylbicyclo[2.2.1]hept-5-ene, 2-(chlorophenyl)bicyclo[2.2.1]hept-5-ene, 4-chlorotetracyclo[6.2.1.1^{3,6}.0^{2,7}]dodec-9-ene, 4-methyl-4-chlorotetracyclo[6.2.1.1^{3,6}.0^{2,7}]dodec-9-ene, etc. may be mentioned.

These monomers (b1) may respectively be used alone or may be used as two types or more combined.

As the cyclic olefin monomer which does not have a polar group (b2), bicyclo[2.2.1]hept-2-ene (also called "norbornene"), 5-ethylbicyclo[2.2.1]hept-2-ene, 5-butyl-bicyclo[2.2.1]hept-2-ene, 5-ethylidene-bicyclo[2.2.1]hept-2-ene, 5-methylidene-bicyclo[2.2.1]hept-2-ene, 5-vinyl-bicyclo[2.2.1]hept-2-ene, tricyclo[5.2.1.0^{2,6}]deca-3,8-diene (common name: dicyclopentadiene), tetracyclo[10.2.1.0^{2,11}.0^{4,9}]pentadec-4,6,8,13-tetraene, tetracyclo[6.2.1.1^{3,6}.0^{2,7}]dodec-4-ene (also called "tetracyclododecene"), 9-methyl-tetracyclo[6.2.1.1^{3,6}.0^{2,7}]dodec-4-ene, 9-ethyl-tetracyclo[6.2.1.1^{3,6}.0^{2,7}]dodec-4-ene, 9-methylidene-tetracyclo[6.2.1.1^{3,6}.0^{2,7}]dodec-4-ene, 9-ethylidene-tetracyclo[6.2.1.1^{3,6}.0^{2,7}]dodec-4-ene, 9-vinyl-tetracyclo[6.2.1.1^{3,6}.0^{2,7}]dodec-4-ene, 9-propenyl-tetracyclo[6.2.1.1^{3,6}.0^{2,7}]dodec-4-ene, pentacyclo[9.2.1.1^{3,9}.0^{2,10}.0^{4,8}]pentadeca-5,12-diene, cyclobutene, cyclopentene, cyclopentadiene, cyclohexene, cycloheptene, cyclooctene, cyclooctadiene, indene, 3a,5,6,7a-tetrahydro-4,7-methano-1H-indene, 9-phenyl-tetracyclo[6.2.1.1^{3,6}.0^{2,7}]dodec-4-ene, tetracyclo[9.2.1.0^{2,10}.0^{3,8}]tetradec-3,5,7,12-tetraene, pentacyclo[9.2.1.1^{3,9}.0^{2,10}.0^{4,8}]pentadec-12-ene, etc. may be mentioned. These monomers (b2) may respectively be used alone or may be used as two types or more combined.

As specific examples of the monomer other than a cyclic olefin (b3), ethylene; propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, and other C₂ to C₂₀ α-olefins; 1,5-hexadiene, 1,4-hexadiene, 4-methyl-1,4-hexadiene, 5-methyl-1,4-hexadiene, 1,7-octadiene, and other nonconjugated dienes and their derivatives; etc. may be mentioned. Among these as well, α-olefin is preferable, ethylene is particularly preferable.

These monomers (b3) may respectively be used alone or may be used as two types or more combined.

Among these monomers (b1) to (b3) as well, from the viewpoint of the effect of the present invention becoming more remarkable, a cyclic olefin monomer which has a polar group other than a protonic polar group (b1) is preferable, while a cyclic olefin which has an N-substituted imide group is particularly preferable.

In the cyclic olefin polymer (A), the ratio of content of units of the copolymerizable monomer (b) is preferably 10 to 90 mol% with respect to the total monomer units, more preferably 20 to 80 mol%, still more preferably 30 to 70 mol%. By controlling ratio of content of the units of the copolymerizable monomer (b) in the above range, it is possible to improve the strength and the insulating property when made into the resin film while making the cyclic olefin polymer (A) sufficient in solubility in an organic solvent.

Note that, in the present invention, it is also possible to introduce a protonic group in a cyclic olefin-based polymer which does not have a protonic polar group utilizing a known modifying agent so as to obtain the cyclic olefin polymer (A).

The polymer which does not have a protonic polar group can be obtained by polymerizing at least one of the above-mentioned monomers (b1) and (b2) and, in accordance with need, a monomer (b3) in any combination.

As a modifier for introducing the protonic polar group, a compound having a proton polar group and a reactive carbon-carbon unsaturated bond in one molecule is usually used.

As Specific examples of such compounds, unsaturated carboxylic acid such as acrylic acid, methacrylic acid, angelic acid, tiglic acid, oleic acid, elaidic acid, erucic acid, brassidic acid, maleic acid, fumaric acid, citraconic acid, mesaconic acid, itaconic acid, atropic acid, and cinnamic acid; unsaturated alchol such as allyl alcohol, methylvinylmethanol, crotyl alcohol, methallyl alcohol, 1-phenylethen-1-ol, 2-propen-1-ol, 3-buten-1-ol, 3-buten-2-ol, 3-methyl-3-buten-1-ol, 3-methyl-2-buten-1-ol, 2-methyl-3-buten-2-ol, 2-methyl-3-buten-1-ol, 4-penten-1-ol, 4-methyl-4-penten-1-ol, and 2-hexen-1-ol; etc. may be mentioned.

The modification reaction of the polymer using these modifiers may be carried out according to a conventional method, and is usually carried out in the presence of a radical generator.

Further, the cyclic olefin polymer (A) used in the present invention may be a ring-opened polymer obtained by ring-opening polymerization of the above-mentioned monomers or may be an addition polymer obtained by addition polymerization of the above-mentioned monomers, but from the viewpoint of the effect of the present invention becoming more remarkable, a ring-opened polymer is preferable.

A ring-opened polymer can be produced by ring-opening metathesis polymerization of a cyclic olefin monomer which has a protonic polar group (a) and a copolymerizable monomer (b) used according to need in the presence of a metathesis reaction catalyst. As the method of production, for example, the method described in International Publication No. 2010/110323A, [0039] to [0079], etc. can be used. On the other hand, an addition polymer can be obtained by causing polymerization of a cyclic olefin monomer which has a protonic polar group (a) and a copolymerizable monomer (b) used according to need using a known additional polymerization catalyst, for example, a catalyst comprised of a compound of titanium, zirconium, or vanadium and an organic aluminum compound.

The cyclic olefin polymer (A) used in the present invention has a weight average molecular weight (Mw) of usually 1,000 to 1,000,000, preferably 1,500 to 100,000, more preferably 2,000 to 10,000 in range.

Further, the cyclic olefin polymer (A) has a molecular weight distribution of a weight average molecular weight/number average molecular weight (Mw/Mn) ratio of usually 4 or less, preferably 3 or less, more preferably 2.5 or less. The weight average molecular weight (Mw) and molecular weight distribution (Mw/Mn) of the cyclic olefin polymer (A) are values which are found by gel permeation chromatography (GPC) using a solvent such as tetrahydrofuran as an eluent and as values converted to polystyrene.

### (Cross-Linking Agent (B))

The resin composition of the present invention further contains a cross-linking agent (B) in addition to the above-mentioned cyclic olefin polymer (A).

As the cross-linking agent (B), one having in its molecule two or more functional groups able to react with a protonic polar group of the cyclic olefin polymer (A) is preferably used. The functional group of the cross-linking agent (B) is not particularly limited so long as one able to react with the protonic polar group of the cyclic olefin polymer (A), but, for example, an amino group, hydroxyl group, epoxy group, isocyanate group, etc. may be mentioned. More preferably, an amino group, epoxy group, and isocyanate group, still more preferably an amino group and epoxy group, may be mentioned.

As specific examples of the cross-linking agent (B), aliphatic polyamines such as hexamethylene diamine; aromatic polyamines such as 4,4'-diaminodiphenyl ether and diaminodiphenyl sulfone; azides such as 2,6-bis(4'-azidebenzal)cyclohexanone and 4,4'-diazidediphenylsulfone; polyamides such as nylon, polyhexamethylenediamine terephthalamide, and polyhexamethylene isophthalamide; compounds having a melamine structure such as N,N,N',N',N'',N''-(hexaalkoxymethyl)melamine; glycolurils such as N,N',N'',N'''-(tetraalkoxymethyl)glycoluril; acrylate compounds such as ethylene glycol di(meth)acrylate; isocyanate-based compounds such as hexamethylene diisocyanate-based polyisocyanate, isophoron diisocyanate-based polyisocyanate, tolylene diisocyanate-based polyisocyanate, and hydrated diphenylmethane diisocyanate; 1,4-di-(hydroxymethyl)cyclohexane, 1,4-di-(hydroxymethyl)norbornane; 1,3,4-trihydroxycyclohexane; epoxy compounds such as a bisphenol A type epoxy resin, bisphenol F type epoxy resin, phenol novolac type epoxy resin, cresol novolac type epoxy resin, polyphenol type epoxy resin, cyclic aliphatic epoxy resin, aliphatic glycidyl ether, and epoxyacrylate polymer; may be mentioned.

As specific examples of the isocyanate-based compound, the Desmodur series (Desmodur BL3370 and Desmodur VPLS2253) and the Crelan series (Crelan V1 and Crelan VPLS2256) made by Sumitomo Bayer Urethane, the Takenate series (B-815N, B-882N, and B-874N) made by Mitsui Takeda Chemicals, the Coronate series (Coronate L) made by Nippon Polyurethane Industry, etc. may be mentioned.

As specific examples of a compound having a melamine structure, "Cymel 300", "Cymel 301", "Cymel 303", "Cymel 350", "Cymel 1123", "Cymel 370", "Cymel 771", "Cymel 272", "Mycoat 102", "Cymel 325", "Cymel 327", "Cymel 703", "Cymel 712", "Mycoat 105", "Mycoat 106", "Cymel 266", "Cymel 267", "Cymel 285", "Cymel 232", "Cymel 235", "Cymel 236", "Cymel 238", "Mycoat 506", "Cymel 701", "Cymel 272", "Cymel 212", "Cymel 253", "Cymel 254", "Mycoat 508", "Cymel 1128", "Mycoat 130", "Cymel 202", "Cymel 207"(above, made by Cytec Industries), "Nikalac MW-30HM", "Nikalac MW390", "Nikalac MX-750", "Nikalac MX-750LM", and "Nikalac MX-706"(above, made by Sanwa Chemicals), etc. may be mentioned.

As specific examples of glycolurils, "Cymel 1170", "Cymel 1172" (above, made by Cytec Industries), "Nikalac MX-270" (above, made by Sanwa Chemicals), etc. may be mentioned.

As specific examples of the epoxy compound, an epoxy compound having an alicyclic structure such as a 3-functional epoxy compound having a dicyclopentadiene skeleton (product name "XD-1000", made by Nippon Kayaku), 1,2-epoxy-4-(2-oxiranyl)cyclohexane adduct of 2,2-bis(hydroxymethyl)1-butanol (15-functional alicyclic epoxy resin having a cyclohexane skeleton and terminal epoxy group, product name "EHPE3150", made by Daicel Chemical Industries), epoxylated 3-cyclohexene-1,2-dicarboxylate bis(3-cyclohexenylmethyl)-modified ε-caprolactone (aliphatic cyclic 3-functional epoxy resin, product name "Epolide GT301", made by Daicel Chemical Industries), epoxylated butanetetracarboxylate tetrakis(3-cyclohexenylmethyl)-modified ε-caprolactone (aliphatic cyclic 4-functional epoxy resin, product name "Epolide GT401", made by Daicel Chemical Industries), 3,4-epoxycyclohexylmethyl acrylate (product name "Cyclomer A400", made by Daicel Chemical Industries), 1,2,8,9-diepoxylimonene (product name "Celloxide 3000", made by Daicel Chemical Industries), (3',4'-epoxycyclohexane)methyl3,4-epoxycyclohexane carboxylate (product name "Celloxide 2021", made by Daicel Chemical Industries), and 1,2-epoxy-4-vinylcyclohexane (product name "Celloxide 2000", made by Daicel Chemical Industries);

an epoxy compound not having an alicyclic structure such as an aromatic amine type polyfunctional epoxy compound (product name "H-434", made by Tohto Chemical Industry), a cresol novolac type polyfunctional epoxy compound (product name "EOCN-1020", made by Nippon Kayaku), a phenol novolac type polyfunctional epoxy compound (Epicoat 152, 154, made by Japan Epoxy Resin), a polyfunctional epoxy compound having a naphthalene skeleton (product name EXA-4700, made by Dainippon Ink and Chemical), chain alkyl polyfunctional epoxy compound (product name "SR-TMP", made by Sakamoto Yakuhin Kogyo), polyfunctional epoxy polybutadiene (product name "Epolide PB3600", made by Daicel Chemical Industries), a glycidyl polyether compound of glycerin (product name "SR-GLG", made by Sakamoto Yakuhin Kogyo), a diglycerin polyglycidyl ether compound (product name "SR-DGE", made by Sakamoto Yakuhin Kogyo), and a polyglycerin polyglycidyl ether compound (product name "SR-4GL", made by Sakamoto Yakuhin Kogyo); may be mentioned.

The cross-linking agent (B) may be used as single types alone or as two types or more combined. Among these as well, a compound having a melamine structure and an epoxy compound are preferable. From the viewpoint of being able to further improve the obtained resin film, it is more preferable that a compound having a melamine structure and an epoxy compound are used in combination. If using a compound having a melamine structure and an epoxy compound in combination, the ratio of content of these is preferably a weight ratio of "a compound having a melamine structure:epoxy compound" of 1:3 to 3:1 in range, more preferably 1:2 to 2:1 in range. Further, as the epoxy compound, an epoxy compound having an alicyclic structure and three or more epoxy groups is more preferable.

The molecular weight of the cross-linking agent (B) is not particularly limited, but is usually 100 to 100,000, preferably 500 to 50,000, more preferably 1,000 to 10,000.

In the resin composition of the present invention, the content of the cross-linking agent (B) is usually 0.1 to 200 parts by weight with respect to 100 parts by weight of the cyclic olefin polymer (A), preferably 1 to 150 parts by weight, more preferably 5 to 100 parts by weight. If the content of the cross-linking agent (B) is in this range, a sufficient heat resistance is obtained, so this is preferable.

### (Organic Solvent (C))

The resin composition of the present invention further contains an organic solvent (C) in addition to the above-mentioned cyclic olefin polymer (A) and cross-linking agent (B).

In the resin composition of the present invention, the organic solvent (C) is used for adjusting the viscosity of the resin composition and the thickness of the resin film formed when coating the resin composition of the present invention and forming a resin film. The organic solvent (C) is usually removed, after forming the resin film, by drying and, furthermore, by subsequent firing.

In the present invention, as the organic solvent (C), from the viewpoint of being able to dissolve the cyclic olefin polymer (A) better and further being able to be suitably removed after forming the resin film, diethylene glycol ethyl methyl ether (MEDG) is preferably used. Furthermore, in the present invention, in the resin composition, the content of the diethylene glycol dimethyl ether (DMDG) is kept down to 10 ppm by weight or less when indexed to the content of diethylene glycol ethyl methyl ether (MEDG) as 100 wt%. Furthermore, due to this, when forming a resin film, the obtained resin film can be made one which enables the formation of an electrode with a low resistance value when forming an electrode such as an ITO electrode on surface of it and further which is excellent in transparency.

Note that, when using the cyclic olefin polymer (A) as the resin for forming the resin composition, diethylene glycol ethyl methyl ether (MEDG) is suitably used as the organic solvent able to dissolve this. Under such conditions, the present inventor focused their studies on the drying process in the manufacturing process for removing the diethylene glycol ethyl methyl ether (MEDG) by drying after coating the resin composition. As a result, the present inventor focused on the fact that the diethylene glycol ethyl methyl ether (MEDG) contains a considerable amount of an unavoidable constituent of a low boiling point constituent mixed in during the manufacturing process, specifically diethylene glycol dimethyl ether (DMDG), whereupon the present inventor discovered the following: That is, the present inventor discovered that such a considerable amount of diethylene glycol dimethyl ether (DMDG) ends up evaporating before the diethylene glycol ethyl methyl ether (MEDG) evaporates. Due to the effect of this evaporation, the surface of the resin film after drying ends up becoming uneven. By keeping the amount of diethylene glycol dimethyl ether (DMDG) down to a specific range, it is possible to make the surface of the resin film after drying uniform. Furthermore, due to this, it is possible to make the obtained resin film one which enables formation of an electrode with a low resistance value when forming an electrode such as an ITO electrode and further is excellent in transparency.

In particular, the diethylene glycol ethyl methyl ether (MEDG) and the unavoidable impurity of diethylene glycol dimethyl ether (DMDG) are removed by drying and further subsequent firing, so are usually not contained in the resin film formed.

As opposed to this, the present inventor took note of not the constituents which remain in the resin film after drying and firing, but the constituents ending up being removed in the process of forming the resin film using the resin composition and as a result obtained the discovery as explained above regarding the effect of the low boiling point constituent of diethylene glycol dimethyl ether (DMDG) and thereby completed the present invention.

In the resin composition of the present invention, the content of the diethylene glycol dimethyl ether (DMDG) is 10 ppm by weight or less when a content of the diethylene glycol ethyl methyl ether (MEDG) is 100 wt%, preferably 9 ppm by weight or less, more preferably 8 ppm by weight or less, still more preferably 6 ppm by weight or less. The lower limit is not particularly limited, but may be 0.01 ppm by weight or more. Further, the content of diethylene glycol dimethyl ether (DMDG) with respect to the total resin composition of the present invention is preferably 10 ppm by weight or less, more preferably 9 ppm by weight or less, still more preferably 8 ppm by weight or less, even more preferably 6 ppm by weight or less, while the lower limit is not particularly limited, but is 0.01 ppm by weight or more.

Note that, in the present invention, as the organic solvent (C), diethylene glycol ethyl methyl ether (MEDG) is used. For this reason, as explained above, diethylene glycol dimethyl ether (DMDG) ends up being contained as an unavoidable constituent. Therefore, in the present invention, for example, by suitably adjusting the distillation conditions etc., as the diethylene glycol ethyl methyl ether (MEDG), one in which the content of diethylene glycol dimethyl ether (DMDG) is made the above range is used. If the content of diethylene glycol dimethyl ether (DMDG) is too great, the formability at the time of forming an electrode such as an ITO electrode on the obtained resin film ends up falling, the resistance value of the electrode such as an ITO electrode formed becomes high, and furthermore the transparency of the resin film itself ends up falling.

### (Other Compounding Agents)

Further, the resin composition of the present invention may contain, if a range where the effect of the present invention is not obstructed, as desired, another compounding agent such as an antioxidant, surfactant, compound having an acidic group or thermal latent acidic group, radiation-sensitive compound, coupling agent or its derivative, photosensitizer, photostabilizer, defoamer, pigment, dye, and filler. Among these, for example, a coupling agent or its derivative, photosensitizer, and photostabilizer described in Japanese Patent Publication No. 2011-75609A etc. may be used.

The antioxidant is not particularly limited, but, for example, one used in a usual polymer such as a phenol-based antioxidant, phosphorus-based antioxidant, sulfur-based antioxidant, amine-based antioxidant, lactone-based antioxidant, etc. may be used. By including an antioxidant, the light resistance and heat resistance of the obtained insulating film can be improved.

As a phenol-based antioxidant, a conventionally known one can be used. For example, an acrylate-based compound described in Japanese Patent Publication No. 63-179953A or Japanese Patent Publication No. 1-168643A such as 2-t-butyl-6-(3-t-butyl-2-hydroxy-5-methylbenzyl)-4-methylphenyl acrylate and 2,4-di-t-amyl-6-[1-(3,5-di-t-amyl-2-hydroxyphenyl)ethyl]phenyl acrylate; an alkyl-substituted phenol-based compound such as 2,6-di-t-butyl-4-methylphenol, 2,6-di-t-butyl-4-ethylphenol, octadecyl-3-(3,5-di-t-butyl-4-hydroxyphenyl)propionate, 2,2'-methylene bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis[2-[3-(3-t-butyl-4-hydroxy-5-methylphenyl)propionyloxy]-1,1-dimethylethyl]-2,4,8,10-tetraoxaspiro[5,5]undecane, 1,1,3-tris(2-methyl-4-hydroxy-5-t-butylphenyl)butane, pentaerythritol-tetrakis[3-(3,5-di-tert-butyl-4-hydroxyphenyl)propionate], triethylene glycol bis[3-(3-t-butyl-4-hydroxy-5-methylphenyl)propionate], and tocopherol; phenol-based compounds containing triazine groups such as 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine, and 2-octylthio-4,6-bis-(3,5-di-t-butyl-4-oxyanilino)-1,3,5-triazine; etc. may be used.

The phosphorus-based antioxidant is not especially limited so long as one usually used in the general plastic industry. For example, monophosphite-based compounds such as triphenyl phosphite, diphenylisodecyl phosphite, phenyldiisodecyl phosphite, tris(nonylphenyl) phosphite, tris(dinonylphenyl) phosphite, tris(2,4-di-t-butylphenyl) phosphite, tris(2-t-butyl-4-methylphenyl) phosphite, tris(cyclohexylphenyl) phosphite, 2,2'-methylenebis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide, and 10-decyloxy-9,10-dihydro-9-oxa-10-phosphaphenanthrene; diphosphite-based compounds such as 4,4'-butylidene-bis(3-methyl-6-t-butylphenyl-di-tolydecyl phosphite), 4,4'-isopropylidene-bis[phenyl-di-alkyl(C12 to C15) phosphite], 4,4'-isopropylidene-bis[diphenylmonoalkyl(C12 to C15) phosphite], 1,1,3-tris(2-methyl-4-di-tolydecylphosphite-5-t-butylphenyl)butane, tetrakis(2,4-di-t-butylphenyl)-4,4'-biphenylenediphosphite, cyclic neopentanetetrylbis (octadecylphosphite), cyclic neopentanetetrylbis(isodecylphosphite), cyclic neopentanetetrylbis(nonylphenylphosphite), cyclic neopentanetetrylbis(2,4-di-t-butylphenylphosphite), cyclic neopentanetetrylbis(2,4-dimethylphenylphosphite), and cyclic neopentanetetrylbis(2,6-di-t-butylphenylphosphite) etc. may be used. Among these as well, a monophosphite-based compound is preferable, while tris(nonylphenyl) phosphite, tris(dinonylphenyl) phosphite, tris(2,4-dit-butylphenyl) phosphite, etc. are particularly preferable.

As the sulfur-based antioxidant, for example, dilauryl 3,3'-thiodipropionate, dimyristyl 3,3'-thiodipropionate, distearyl 3,3'-thiodipropionate, laurylstearyl 3,3'-thiodipropionate, pentaerythritol-tetrakis-(β-lauryl-thiopropionate), 3,9-bis(2-dodecylthioethyl)-2,4,8,10-tetraoxaspiro[5,5]undecane, etc. can be used.

Among these as well, a phenol-based antioxidant is preferable. Among these, pentaerythritol-tetrakis[3-(3,5-di-tert-butyl-4-hydroxyphenyl)propionate] is more preferable.

These antioxidants may be used as single types alone or as two types or more combined.

In the resin composition of the present invention, the content of the antioxidant is preferably 0.1 to 10 parts by weight with respect to 100 parts by weight of the cyclic olefin polymer (A), more preferably 1 to 5 parts by weight. If the content of the antioxidant is in the above range, it is possible to make the light resistance and heat resistance of the obtained resin film excellent ones.

The surfactant is used for the purpose of preventing striation etc. As the surfactant, for example, a silicone-based surfactant, fluorine-based surfactant, polyoxyalkylene-based surfactant, methacrylate copolymer-based surfactant, acrylate copolymer-based surfactant, etc. may be mentioned.

As the silicone-based surfactant, for example, "SH28PA", "SH29PA", "SH30PA", "ST80PA", "ST83PA", "ST86PA", "SF8416", "SH203", "SH230", "SF8419", "SF8422", "FS1265", "SH510", "SH550", "SH710", "SH8400", "SF8410", "SH8700", and "SF8427" (above, made by Toray-Dow Corning), product name "KP-321", "KP-323", "KP-324", "KP-340", and "KP-341" (above, made by Shin-Etsu Chemical), product name "TSF400", "TSF401", "TSF410", "TSF4440", "TSF4445", "TSF4450", "TSF4446", "TSF4452", and "TSF4460" (above, made by Momentive Performance Materials Japan), product name "BYK300", "BYK301", "BYK302", "BYK306", "BYK307", "BYK310", "BYK315", "BYK320", "BYK322", "BYK323", "BYK331", "BYK333", "BYK370""BYK375", "BYK377", and "BYK378" (above, BYK Chemie Japan), etc. may be mentioned.

As the fluorine-based surfactant, for example, Fluorinert "FC-430", "FC-431"(above, made by Sumitomo 3M), Surflon "S-141", "S-145", "S-381", "S-393" (above, made by Asahi Glass), Eftop® "EF301", "EF303", "EF351", "EF352" (above, made by Jemco), Megafac® "F171", "F172", "F173", "R-30" (above, made by DIC Corporation), etc. may be mentioned.

As the polyoxyalkylene-based surfactant, for example, polyoxyethylene alkyl ethers such as polyoxyethylene lauryl ether, polyoxyethylene stearyl ether, polyoxyethylene oleyl ether, polyoxyethylene octylphenyl ether, polyoxyethylene nonylphenyl ether, polyethylene glycol dilaurate, polyethylene glycol distearate, polyoxyethylene dialkyl esters, etc. may be mentioned.

These surfactants may be used as single types alone or as two types or more combined.

In the resin composition of the present invention, the content of the surfactant is preferably 0.01 to 0.5 part by weight with respect to 100 parts by weight of the cyclic olefin polymer (A), more preferably 0.02 to 0.2 part by weight. If the content of the surfactant is in the above range, the effect of prevention of striation can be enhanced more.

The compound having an acidic group or thermal latent acidic group is not particularly limited so long as having an acidic group or a thermal latent acidic group generating an acidic group by heating, preferably is an aliphatic compound, aromatic compound, or heterocyclic compound, more preferably an aromatic compound and heterocyclic compound.

These compounds having an acidic group or a thermal latent acidic group may be used respectively alone or as two or more types combined.

The number of the acidic groups and thermal latent acidic groups of the compounds having an acidic group or thermal latent acidic group is not particularly limited, but preferably the compound has a total of two or more acidic groups and/or thermal latent acidic groups. The acidic groups or thermal latent acidic groups may be the same as or different from each other.

The acidic group may be an acidic functional group. As specific examples, strong acidic groups such as sulfonic acid groups and phosphoric acid groups and weakly acidic groups such as carboxyl groups, thiol groups, and carboxymethylene thio groups may be mentioned. Among these as well, a carboxyl group, thiol group, or carboxymethylene thio group is preferable, while a carboxyl group is particularly preferable. Further, among these acidic groups, one with an acid dissociation constant pKa of 3.5 to 5.0 in range is preferable. Note that, when there are two or more acidic groups, the first dissociation constant pKa1 is made the acid dissociation constant and the first dissociation constant pKa1 is preferably in the above range. Further pKa is found by measuring the acid dissociation constant Ka=[H₃O⁺] [B⁻]/[BH] under dilute aqueous solution conditions and using pKa=-logKa. Here, BH indicates an organic acid, while B⁻ indicates a conjugated base of an organic acid.

Note that, the method of measurement of pKa, for example, may comprise using a pH meter to measure the hydrogen ion concentration and calculating pKa from the concentration of the substance and the hydrogen ion concentration.

Further, the thermal latent acidic group may be a group generating an acidic functional group by heating. As a specific example, a sulfonium base, a benzothiazolium base, an ammonium base, block carboxylic acid group, etc. may be mentioned. Among these as well, a block carboxylic acid group is preferable. Note that, the blocking agent of the carboxyl group used for obtaining the block carboxylic acid group is not particularly limited, but a vinyl ether compound is preferable.

Furthermore, the compound having an acidic group or thermal latent acidic group may also have a substituent other than an acidic group and latent acidic group.

As such a substituent, in addition to a hydrocarbon group such as alkyl group and aryl group, a halogen atom; an alkoxy group, aryloxy group, acyloxy group, heterocyclic oxy group; an amino group, acylamino group, ureido group, sulfamoylamino group, alkoxycarbonylamino group, and aryloxycarbonylamino group which are substituted by an alkyl group, aryl group, or heterocyclic group; an alkylthio group, arylthio group, and heterocyclic thio group; and other polar groups not having protons, hydrocarbon groups substituted by these polar groups not having protons, etc. may be mentioned.

As specific examples of the compound having an acidic group in such a compound having an acidic group or thermal latent acidic group, an aliphatic compound such as methanoic acid, ethanoic acid, propanoic acid, butanoic acid, pentanoic acid, hexanoic acid, heptanoic acid, octanoic acid, nonanoic acid, decanoic acid, glycolic acid, glyceric acid, ethanedioic acid (also referred to as "oxalic acid"), propanedioic acid (also referred to as "malonic acid"), butanedioic acid (also referred to as "succinic acid"), pentanedioic acid, hexanedioic acid (also referred to as "adipic acid"), 1,2-cyclohexanedicarboxylic acid, 2-oxopropanoic acid, 2-hydroxybutanedioic acid, 2-hydroxypropanetricarboxylic acid, mercaptosuccinic acid, dimercaptosuccinic acid, 2,3-dimercapto-1-propanol, 1,2,3-trimercaptopropane, 2,3,4-trimercapto-1-butanol, 2,4-dimercapto-1,3-butanediol, 1,3,4-trimercapto-2-butanol, 3,4-dimercapto-1,2-butanediol, and 1,5-dimercapto-3-thiapentane;
an aromatic compound such as benzoic acid, p-hydroxybenzene carboxylic acid, o-hydroxybenzene carboxylic acid, 2-naphthalene carboxylic acid, methyl benzoic acid, dimethyl benzoic acid, trimethyl benzoic acid, 3-phenyl propanoic acid, dihydroxybenzoic acid, dimethoxybenzoic acid, benzene-1,2-dicarboxylic acid (also referred to as "phthalic acid"), benzene-1,3-dicarboxylic acid (also referred to as "isophthalic acid"), benzene-1,4-dicarboxylic acid (also referred to as "terephthalic acid"), benzene-1,2,3-tricarboxylic acid, benzene-1,2,4-tricarboxylic acid, benzene-1,3,5-tricarboxylic acid, benzene hexacarboxylic acid, biphenyl-2,2'-dicarboxylic acid, 2-(carboxymethyl)benzoic acid, 3-(carboxymethyl)benzoic acid, 4-(carboxymethyl)benzoic acid, 2-(carboxycarbonyl)benzoic acid, 3-(carboxycarbonyl)benzoic acid, 4-(carboxycarbonyl)benzoic acid, 2-mercaptobenzoic acid, 4-mercaptobenzoic acid, diphenolic acid, 2-mercapto-6-naphthalene carboxylic acid, 2-mercapto-7-naphthalene carboxylic acid, 1,2-dimercaptobenzene, 1,3-dimercaptobenzene, 1,4-dimercaptobenzene, 1,4-naphthalenedithiol, 1,5-naphthalenedithiol, 2,6-naphthalenedithiol, 2,7-naphthalenedithiol, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, and 1,3,5-tris(mercaptoethyl)benzene;
a five-member heterocyclic compound containing a nitrogen atom such as nicotinic acid, isonicotinic acid, 2-furoic acid, pyrrole-2,3-dicarboxylic acid, pyrrole-2,4-dicarboxylic acid, pyrrole-2,5-dicarboxylic acid, pyrrole-3,4-dicarboxylic acid, imidazole-2,4-dicarboxylic acid, imidazole-2,5-dicarboxylic acid, imidazole-4,5-dicarboxylic acid, pyrazole-3,4-dicarboxylic acid, and pyrazole-3,5-dicarboxylic acid; a five-membered heterocyclic compound containing a nitrogen atom and a sulfur atom such as thiophene-2,3-dicarboxylic acid, thiophene-2,4-dicarboxylic acid, thiophene-2,5-dicarboxylic acid, thiophene-3,4-dicarboxylic acid, thiazole-2,4-dicarboxylic acid, thiazole-2,5-dicarboxylic acid, thiazole-4,5-dicarboxylic acid, isothiazole-3,4-dicarboxylic acid, isothiazole-3,5-dicarboxylic acid, 1,2,4-thiadiazole-2,5-dicarboxylic acid, 1,3,4-thiadiazole-2,5-dicarboxylic acid, 3-amino-5-mercapto-1,2,4-thiadiazole, 2-amino-5-mercapto-1,3,4-thiadiazole, 3,5-dimercapto-1,2,4-thiadiazole, 2,5-dimercapto-1,3,4-thiadiazole, 3-(5-mercapto-1,2,4-thiadiazol-3-ylsulfanyl)succinic acid, 2-(5-mercapto-1,3,4-thiadiazol-2-ylthio)succinic acid, (5-mercapto-1,2,4-thiadiazol-3-ylthio)acetic acid, (5-mercapto-1,3,4-thiadiazol-2-ylthio)acetic acid, 3-(5-mercapto-1,2,4-thiadiazol-3-ylthio)propionic acid, 2-(5-mercapto-1,3,4-thiadiazol-2-ylthio)propionic acid, 3-(5-mercapto-1,2,4-thiadiazol-3-ylthio)succinic acid, 2-(5-mercapto-1,3,4-thiadiazol-2-ylthio)succinic acid, 4-(3-mercapto-1,2,4-thiadiazol-5-yl)thiobutane sulfonic acid, and 4-(2-mercapto-1,3,4-thiadiazol-5-yl)thiobutane sulfonic acid;
a six-member heterocyclic compound containing a nitrogen atom such as pyridine-2,3-dicarboxylic acid, pyridine-2,4-dicarboxylic acid, pyridine-2,5-dicarboxylic acid, pyridine-2,6-dicarboxylic acid, pyridine-3,4-dicarboxylic acid, pyridine-3,5-dicarboxylic acid, pyridazine-3,4-dicarboxylic acid, pyridazine-3,5-dicarboxylic acid, pyridazine-3,6-dicarboxylic acid, pyridazine-4,5-dicarboxylic acid, pyrimidine-2,4-dicarboxylic acid, pyrimidine-2,5-dicarboxylic acid, pyrimidine-4,5-dicarboxylic acid, pyrimidine-4,6-dicarboxylic acid, pyrazine-2,3-dicarboxylic acid, pyrazine-2,5-dicarboxylic acid, pyridine-2,6-dicarboxylic acid, triazine-2,4-dicarboxylic acid, 2-diethylamino-4,6-dimercapto-s-triazine, 2-dipropylamino-4,6-dimercapto-s-triazine, 2-dibutylamino-4,6-dimercapto-s-triazine, 2-anilino-4,6-dimercapto-s-triazine, and 2,4,6-trimercapto-s-triazine; etc. may be mentioned.

Further, among the compounds having an acidic group or thermal latent acidic group, as specific examples of compounds having a thermal latent acidic group, a compound converting the acidic group of the above-mentioned compound having an acidic group to a thermal latent acidic group may be mentioned. For example, it is possible to use 1,2,4-benzenetricarboxylate tris(1-propoxyethyl) obtained by converting the carboxyl group of 1,2,4-benzenetricarboxylate to a block carboxylic acid group etc. may be used as a compound having a thermal latent acidic group. From the viewpoint of raising more the adhesion of the insulating film obtained, the number of thermal latent acidic groups in the compound having a thermal latent acidic group is preferably two or more.

In the resin composition of the present invention, the content of the compound having an acidic group or thermal latent acidic group is preferably 0.1 to 50 parts by weight with respect to 100 parts by weight of the cyclic olefin polymer (A), more preferably 1 to 45 parts by weight, still more preferably 2 to 40 parts by weight, even more preferably 3 to 30 parts by weight in range. By making the amount of use of the compound having an acidic group or thermal latent acidic group the above range, it is possible to make the resin composition one excellent in stability in liquid state.

A radiation-sensitive compound is a compound enabling a chemical reaction to be caused by irradiation of radiation such as ultraviolet rays or electron beams. As the radiation-sensitive compound, one which can control the alkali solubility of the resin film formed from the resin composition of the present invention is preferable. A photoacid generator is suitable.

As the photoacid generator, for example, an azide compound such as an acetophenone compound, triaryl sulfonium salt, and quinone diazide compound etc. may be mentioned, preferably an azide compound, more preferably quinone diazide compound, may be mentioned.

As the quinone diazide compound, for example, an ester compound of a quinone diazide sulfonic acid halide and a compound having a phenolic hydroxyl group may be used. As specific examples of a quinone diazide sulfonic acid halide, 1,2-naphthoquinone diazide-5-sulfonic acid chloride, 1,2-naphthoquinone diazide-4-sulfonic acid chloride, 1,2-benzoquinone diazide-5-sulfonic acid chloride, etc. may be mentioned. As typical examples of a compound having a phenolic hydroxyl group, 1,1,3-tris(2,5-dimethyl-4-hydroxyphenyl)-3-phenylpropane, 4,4'-[1-[4-[1-[4-hydroxyphenyl]-1-methyethyl]phenyl]ethylidene]bisphenol, etc. may be mentioned. As a compound having a phenolic hydroxyl group other than these, 2,3,4-trihydroxybenzophenone, 2,3,4,4'-tetrahydroxybenzophenone, 2-bis(4-hydroxyphenyl)propane, tris(4-hydroxyphenyl)methane, 1,1,1-tris(4-hydroxy-3-methylphenyl)ethane, 1,1,2,2-tetrakis(4-hydroxyphenyl)ethane, an oligomer of a novolac resin, an oligomer obtained by copolymerization of a compound having one or more phenolic hydroxyl groups and dicyclopentadiene, etc. may be mentioned.

Among these as well, a condensate of a 1,2-naphthoquinone diazide-5-sulfonic acid chloride and a compound having a phenolic hydroxyl group is preferable, while a condensate of 1,1,3-tris(2,5-dimethyl-4-hydroxyphenyl)-3-phenylpropane (1 mole) and 1,2-naphthoquinone diazide-5-sulfonic acid chloride (2.5 moles) is more preferable.

As the photoacid generator, other than a quinine diazide compound, a known one such as an onium salt, halogenated organic compound, α,α'-bis(sulfonyl)diazomethane-based compound, α-carbonyl-α'-sulfonyldiazomethane-based compound, sulfone compound, organic acid ester compound, organic acid amide compound, and an organic acid imide compound can be used.

These radiation-sensitive compounds may be used respectively alone or as two or more types combined.

In the resin composition of the present invention, the content of the radiation-sensitive compound is preferably 1 to 100 parts by weight with respect to 100 parts by weight of the cyclic olefin polymer (A), more preferably 5 to 50 parts by weight, still more preferably 10 to 40 parts by weight.

The method of preparing the resin composition of the present invention is not particularly limited. The constituents forming the resin composition may be mixed by a known method.

The method of mixing is not particularly limited, but it is preferable to dissolve or disperse the constituents forming the resin composition in an organic solvent (C) and mix the obtained solution or dispersion. Due to this, the resin composition can be obtained in the form of a solution or dispersion.

The method of dissolving or dispersing the constituents forming the resin composition in the organic solvent (C) may be based on an ordinary method. Specifically, it is possible to use stirring using a stirrer and magnetic stirrer, a high speed homogenizer, a disperser, a planetary stirrer, a twin-screw stirrer, a ball mill, a triple roll, etc. Further, after dissolving or dispersing the constituents in the solvent, for example, the mixture may be filtered using a pore size 0.5 µm or so filter.

In the resin composition of the present invention, the solids concentration (concentration of constituents other than organic solvent (C)) is not particularly limited, but is preferably 5 to 50 wt%, more preferably 7 to 45 wt%, still more preferably 9 to 40 wt%.

### (Resin Film)

The resin film of the present invention can be obtained using the above resin composition of the present invention. The radiation-sensitive resin film of the present invention is preferably obtained by the above resin composition of the present invention being formed on the substrate.

As the substrate, for example, a printed circuit board, silicon wafer substrate, soda glass or other glass substrate, polyethylene naphthalate or other plastic substrate, etc. may be used. Among these as well, a soda glass substrate used for a display device provided with a touch panel structure or a polyethylene naphthalate substrate is preferably used.

The method of forming the resin film is not particularly limited, but for example the coating method, film lamination method, or other method can be used.

The coating method is, for example, the method of coating a resin composition, then drying by heating to remove the solvent. As the method of coating the resin composition, for example, the spray method, spin coat method, roll coat method, die coat method, doctor blade method, spin coat method, bar coat method, screen print method, and other various methods can be employed. The heating and drying conditions differ according to the type and ratio of the ingredients, but are usually 30 to 150°C, preferably 60 to 120°C usually for 0.5 to 90 minutes, preferably 1 to 60 minutes, more preferably 1 to 30 minutes.

The film lamination method is a method comprising coating a resin composition on a resin film, metal film or other substrate for forming B-stage film, then heating and drying it to remove the solvent to obtain the B-stage film, then laminating this B-stage film. The heating and drying conditions may be suitably selected in accordance with the types and ratios of content of the ingredients, but the heating temperature is usually 30 to 150°C and the heating time is usually 0.5 to 90 minutes. The film lamination may be performed by using a press laminator, press, vacuum laminator, vacuum press, roll laminator, and other press bonding machines.

The thickness of the resin film is not particularly limited, but may be suitably set in accordance with the application, but when the resin film is a protective film or insulating film of, for example, a touch panel structure of a display device provided with a touch panel structure, the thickness of the resin film is preferably 0.1 to 100 µm, more preferably 0.5 to 50 µm, furthermore preferably 0.5 to 30 µm.

Further, in the present invention, it is possible to perform a cross-linking reaction for the resin after forming the resin film on the substrate.

The cross-linking of the resin film formed on the substrate may be performed by selecting a suitable method in accordance with the type of the cross-linking agent (B), but usually is performed by heating. The heating method, for example, may be one using a hot plate, oven, etc. The heating temperature is usually 180 to 250°C. The heating time is suitably selected in accordance with the size, thickness of the resin film, and the equipment which is used, etc. For example, when using a hot plate, it is normally 5 to 60 minutes, while when using an oven, it is normally 30 to 90 minutes. The heating may be performed in accordance with need in an inert gas atmosphere. The inert gas may be one which does not contain oxygen and which does not oxidize a resin film. For example, nitrogen, argon, helium, neon, xenon, krypton, etc. may be mentioned. Among these as well, nitrogen and argon are preferable. In particular, nitrogen is preferable. In particular, inert gas with an oxygen content of 0.1 vol% or less, preferably 0.01 vol% or less, in particular nitrogen, is suitable. These inert gases may be respectively used alone or as two types or more combined.

Further, if the resin composition of the present invention is one further containing the radiation-sensitive compound, the resin film formed on the substrate may be patterned to form a patterned resin film.

As the method of patterning a resin film, for example, the method of forming a resin film before patterning, irradiating active radiation at the resin film before patterning to form latent patterns, then bringing the resin film which has the latent patterns into contact with the developing solution to bring out the patterns etc. may be mentioned.

The active radiation is not particularly limited so long as able to activate radiation-sensitive compound contained in the resin composition and change the alkali solubility of the resin composition containing the radiation-sensitive compound. Specifically, ultraviolet light, g-rays or i-rays and other single wavelength ultraviolet light, KrF excimer laser light, ArF excimer laser light, and other light beams; electron beams and other particle beams; etc. may be used. As the method of selectively radiating active radiation in a pattern manner to form latent patterns, an ordinary method may be used. For example, the method of using a reduced projection exposure apparatus etc. to irradiate ultraviolet light, g-rays, i-rays, KrF excimer laser light, ArF excimer laser light, and other light beams through a desired mask pattern or the method of using an electron beam or other particle beam for lithography etc. may be used. When using light beams as active radiation, single wavelength light or mixed wavelength light may be used. The irradiation conditions may be suitably selected in accordance with the active radiation used, but, for example, when using wavelength 200 to 450 nm light beams, the amount of irradiation is normally 10 to 1,000 mJ/cm², preferably 50 to 500 mJ/cm² in range and is determined in accordance with the irradiation time and illuminance. After irradiating the active radiation in this way, in accordance with need, the resin film is heat treated at 60 to 130°C or so in temperature for 1 to 2 minutes or so.

Next, the latent patterns which are formed in the resin film before patterning are developed to bring them out. As the developing solution, normally aqueous solutions of alkali compounds may be used. As alkali compounds, for example, alkali metal salts, amines, and ammonium salts may be used. The alkaline compounds may be inorganic compounds or organic compounds. As specific examples of these compounds, sodium hydroxide, potassium hydroxide, sodium carbonate, sodium silicate, sodium metasilicate, and other alkali metal salts; ammonia water; ethylamine, n-propylamine, and other primary amines; diethylamine, di-n-propylamine, and other secondary amines; triethylamine, methyldiethylamine, and other tertiary amines; tetramethylammonium hydroxide, tetraethylammonium hydroxide, tetrabutylammonium hydroxide, choline, and other quaternary ammonium salts; dimethylethanolamine, triethanolamine, and other alcohol amines; pyrrole, piperidine, 1,8-diazabicyclo[5.4.0]undec-7-ene, 1,5-diazabicyclo[4.3.0]non-5-ene, N-methylpyrrolidone, and other cyclic amines; etc. may be mentioned. These alkali compounds may be respectively used alone or as two types or more combined.

As the aqueous medium which is used as the alkali aqueous solution, water; methanol, ethanol, and other water soluble organic solvents may be used. The alkali aqueous solution may have a surfactant etc. added in a suitable amount.

As the method for bringing the developing solution in contact with the resin film which has the latent patterns, for example, the puddle method, spray method, dipping method, and other methods may be used. The development conditions are suitably selected as normally 0 to 100°C, preferably 5 to 55°C, more preferably 10 to 30°C and normally 30 to 180 seconds.

The resin film which is formed with the targeted patterns in this way, for example, may be washed by UV ozone treatment or may be rinsed by a rinse solution so as to remove development residue.

In the present invention, the resin film may be cross-linked after patterning. The cross-linking can be performed by the above-mentioned method.

### (Use of the Resin Film for Making an Electronic Device)

The above-mentioned resin film of the present invention can be used for making an electronic device. Such electronic device is not particularly limited. Various electronic devices may be mentioned. Specifically, a display device provided with a touch panel such as a touch pallet or flexible organic EL device may be mentioned.

The display device provided with a touch panel structure as one example of the electronic device that can be made using the resin film of the present invention is not particularly limited, but one provided with a soda glass substrate or polyethylene naphthalate on which are arranged electrode layers comprised of a pair of ITO electrodes straddling an insulating film may be mentioned. In this case, the above-mentioned resin film of the present invention may be made an insulating film sandwiched between electrode layers or a protective film for protecting the touch panel structure.

The resin composition of the present invention comprises a cyclic olefin polymer (A) having a protonic polar group, a cross-linking agent (B), and an organic solvent (C). The organic solvent (C) contains diethylene glycol ethyl methyl ether (MEDG), while the content of the diethylene glycol dimethyl ether (DMDG) contained in the organic solvent (C) was controlled to 10 ppm by weight or less when indexed to the content of diethylene glycol ethyl methyl ether (MEDG) as 100 wt%, so the resin film obtained using the resin composition of the present invention enables formation of an electrode with a low resistance value when forming an electrode such as an ITO electrode and further is excellent in transparency. For this reason, the resin film obtained using such a resin composition of the present invention can be suitably used as an insulating film or protective film of a display device provided with a touch panel structure.

Note that, the resin film obtained using the resin composition of the present invention is one which can be suitably used for the application of an insulating film or protective film of a display device provided with a touch panel structure in this way, but it of course may also be used for applications other than an insulating film or protective film of a display device provided with a touch panel structure.

### EXAMPLES

Below, examples and comparative examples will be given to explain the present invention more specifically. In the examples, the "parts" are based on weight so long as not indicated otherwise.

Note that the definitions and methods of evaluation of the characteristics are as follows:

### <Resistivity of ITO Electrode>

A glass substrate (made by Corning, product name Corning 1737) was coated by a resin composition by spin coating, was heated to dry (prebaked) using a hot plate at 90°C for 2 minutes, then was made to cure (baked) in the atmosphere under condition of 230°C for 60 minutes to form a film thickness 1.5 µm resin film and obtain a laminate. Next, the surface of the resin film of the obtained laminate was formed with a thickness 41.2 nm ITO film by sputtering. Furthermore, the ITO film formed was measured for resistivity (units: Ω) using a Digital Multimeter CDM-11D made by Custom.

### <Light Transmittance>

The laminate formed with an ITO film prepared by the above was measured for the light transmittance (light path length of 0.0015 mm) at light of a wavelength of 400 nm using an ultraviolet visible spectrophotometer (product name "UV-VIS V570", made by JASCO Corporation).

### <<Synthesis Example 1>>

### <Preparation of Polymer Solution of Cyclic Olefin Polymer (A-1) (Low DMDG)>

100 parts of a monomer mixture comprised of 40 mol% of N-(2-ethylhexyl)-bicyclo[2.2.1]hept-5-ene-2,3-dicarboxyimide and 60 mol% of 4-hydroxycarbonyltetracyclo[6.2.1.1^{3,6}.0^{2,7}]dodec-9-ene, 2 parts of 1,5-hexadiene, 0.02 part of (1,3-dimesitylimidazolin-2-yldene) (tricyclohexylphosphine)benzylidene ruthenium dichloride (synthesized by the method described in Org. Lett., vol. 1, p. 953, 1999), and 200 parts of diethylene glycol ethyl methyl ether (MEDG) (product name "Hysorb EDM-S", made by Toho Chemical Industry, content of diethylene glycol dimethyl ether (DMDG): 5 ppm by weight) were charged into a nitrogen-substituted glass pressure resistant reactor and stirred while causing a reaction at 80°C for 4 hours to obtain a polymerization reaction.

Furthermore, the obtained polymerization reaction solution is placed in an autoclave and stirred at 150°C at a hydrogen pressure of 4 MPa for 5 hours to perform a hydrogenation reaction to obtain a polymer solution of a cyclic olefin polymer (A-1) (low DMDG). The polymerization conversion rate of the obtained cyclic olefin polymer (A-1) was 99.7%, the polystyrene conversion weight average molecular weight was 7,150, the polystyrene conversion number average molecular weight was 4,690, the molecular weight distribution was 1.52, and the hydrogenation rate was 99.7%. Further, the solids concentration of the obtained polymer solution of the cyclic olefin polymer (A-1) (low DMDG) was 34.4 wt%.

### <<Synthesis Example 2>>

### <Preparation of Polymer Solution of Cyclic Olefin Polymer (A-1) (High DMDG) >

Except for using, instead of 200 parts of diethylene glycol ethyl methyl ether (MEDG) (product name "Hysorb EDM-S", made by Toho Chemical Industry, content of diethylene glycol dimethyl ether (DMDG): 5 ppm by weight), 200 parts of diethylene glycol ethyl methyl ether (MEDG) (product name "Hysorb EDM", made by Toho Chemical Industry, content of diethylene glycol dimethyl ether (DMDG): 69 ppm by weight), the same procedure was followed as in Synthesis Example 1 to obtain a polymer solution of the cyclic olefin polymer (A-1) (high DMDG). The polymerization conversion rate of the obtained cyclic olefin polymer (A-1) was 99.7%, the polystyrene conversion weight average molecular weight was 7,150, the polystyrene conversion number average molecular weight was 4,690, the molecular weight distribution was 1.52, and the hydrogenation rate was 99.7%. Further, the solids concentration of the obtained polymer solution of the cyclic olefin polymer (A-1) (high DMDG) was 34.4 wt%.

### <<Example 1>>

### <Preparation of Resin Composition>

As a cyclic olefin polymer (A), 291 parts of a polymer solution of the cyclic olefin polymer (A-1) obtained by Synthesis Example 1 (low DMDG) (100 parts as cyclic olefin polymer (A-1)), 50 parts of a cross-linking agent (B) comprised of an epoxylated butanetetracarboxylate tetrakis(3-cyclohexenylmethyl)-modified ε-caprolactone (product name "Epolide GT401", made by Daicel Chemical Industries, aliphatic cyclic 4-functional epoxy resin having a cyclic epoxy group, molecular weight (Mw)=730), 1.5 parts of an antioxidant comprised of pentaerythritol-tetrakis[3-(3,5-di-tert-butyl-4-hydroxyphenyl)propionate] (product name "Irganox 1010", made by BASF), 0.03 part of a surfactant comprised of a silicone-based surfactant (product name "KP341", made by ShinEtsu Chemical), and 745 parts of a solvent comprised of diethylene glycol ethyl methyl ether (MEDG) (product name "Hysorb EDM-S", made by Toho Chemical Industry, content of diethylene glycol dimethyl ether (DMDG): 5 ppm by weight) were mixed and made to dissolve, then the mixture was filtered by a polytetrafluoroethylene filter with a pore size of 0.45 µm to prepare a resin composition with a solids concentration of 15 wt%.

Note that, the obtained resin composition was measured for content of diethylene glycol dimethyl ether (DMDG) by gas chromatography, whereby it was 5 ppm by weight with respect to 100 wt% of diethylene glycol ethyl methyl ether (MEDG) and, further, was 4.3 ppm by weight with respect to the total resin composition.

Furthermore, the obtained resin composition was used to measure the resistivity of the ITO electrode and light transmittance in accordance with the above methods. The results are shown in Table 1.

### <<Example 2>>

When preparing the resin composition, except for changing the content of the diethylene glycol ethyl methyl ether (MEDG) (product name "Hysorb EDM-S", made by Toho Chemical Industry, content of diethylene glycol dimethyl ether (DMDG): 5 ppm by weight) from 745 parts to 526 parts, the same procedure was followed as in Example 1 to prepare a resin composition with a solids concentration of 20 wt%.

Note that, the obtained resin composition was measured for content of diethylene glycol dimethyl ether (DMDG) in the same way as in Example 1, whereby it was 5 ppm by weight with respect to 100 wt% of diethylene glycol ethyl methyl ether (MEDG) and, further, was 4 ppm by weight with respect to the total resin composition.

Furthermore, the obtained resin composition was used to measure the resistivity of the ITO electrode and light transmittance in accordance with the above methods. The results are shown in Table 1.

### <<Example 3>>

When preparing the resin composition, except for changing the amount of use of diethylene glycol ethyl methyl ether (MEDG) (product name "Hysorb EDM-S", made by Toho Chemical Industry, content of diethylene glycol dimethyl ether (DMDG): 5 ppm by weight) from 745 parts to 706 parts and further mixing in 40 parts of a radiation-sensitive compound comprised of a condensate of 1,1,3-tris(2,5-dimethyl-4-hydroxyphenyl)-3-phenylpropane (1 mole) and 2.0 moles of 1,2-naphthoquinone diazide-5-sulfonic acid chloride (product name "TS-200", made by Toyogosei), the same procedure was followed as in Example 1 to prepare a resin composition with a solids concentration of 19.5 wt%.

Note that, the obtained resin composition was measured for content of diethylene glycol dimethyl ether (DMDG) in the same way as in Example 1, whereby it was 5 ppm by weight with respect to 100 wt% of diethylene glycol ethyl methyl ether (MEDG) and, further, was 4 ppm by weight with respect to the total resin composition.

Furthermore, the obtained resin composition was used to measure the resistivity of the ITO electrode and light transmittance in accordance with the above methods. The results are shown in Table 1.

### <<Example 4>>

When preparing the resin composition, except for changing the amount of use of diethylene glycol ethyl methyl ether (MEDG) (product name "Hysorb EDM-S", made by Toho Chemical Industry, content of diethylene glycol dimethyl ether (DMDG): 5 ppm by weight) from 745 parts to 700 parts and further mixing in 45 parts of diethylene glycol ethyl methyl ether (MEDG) (product name "Hysorb EDM", made by Toho Chemical Industry, content of diethylene glycol dimethyl ether (DMDG): 69 ppm by weight), the same procedure was followed as in Example 1 to prepare a resin composition with a solids concentration of 20 wt%.

Note that, the obtained resin composition was measured for content of diethylene glycol dimethyl ether (DMDG) in the same way as in Example 1, whereby it was 8.9 ppm by weight with respect to 100 wt% of diethylene glycol ethyl methyl ether (MEDG) and, further, was 7.5 ppm by weight with respect to the total resin composition.

Furthermore, the obtained resin composition was used to measure the resistivity of the ITO electrode and light transmittance in accordance with the above methods. The results are shown in Table 1.

### <<Comparative Example 1>>

When preparing the resin composition, except for using, instead of the polymer solution of the cyclic olefin polymer (A-1) obtained in Synthesis Example 1 (low DMDG), 291 parts of the polymer solution of the cyclic olefin polymer (A-1) obtained in Synthesis Example 2 (high DMDG) (100 parts as cyclic olefin polymer (A-1)) and using, instead of diethylene glycol ethyl methyl ether (MEDG) (product name "Hysorb EDM-S", made by Toho Chemical Industry, content of diethylene glycol dimethyl ether (DMDG): 5 ppm by weight), 745 parts of diethylene glycol ethyl methyl ether (MEDG) (product name "Hysorb EDM", made by Toho Chemical Industry, content of diethylene glycol dimethyl ether (DMDG): 69 ppm by weight), the same procedure was followed as in Example 1 to prepare a resin composition with a solids concentration of 15 wt%.

Note that, the obtained resin composition was measured for content of diethylene glycol dimethyl ether (DMDG) in the same way as in Example 1, whereby it was 64 ppm by weight with respect to 100 wt% of diethylene glycol ethyl methyl ether (MEDG) and, further, 54 ppm by weight with respect to the total resin composition.

Furthermore, the obtained resin composition was used to measure the resistivity of the ITO electrode and light transmittance in accordance with the above methods. The results are shown in Table 1.

### <<Comparative Example 2>>

When preparing a resin composition, except for using instead of diethylene glycol ethyl methyl ether (MEDG) (product name "Hysorb EDM-S", made by Toho Chemical Industry, content of diethylene glycol dimethyl ether (DMDG): 5 ppm by weight), 526 parts of diethylene glycol ethyl methyl ether (MEDG) (product name "Hysorb EDM", made by Toho Chemical Industry, content of diethylene glycol dimethyl ether (DMDG): 69 ppm by weight), the same procedure was followed as in Example 1 to prepare a resin composition with a solids concentration of 20 wt%.

Note that, the obtained resin composition was measured for content of diethylene glycol dimethyl ether (DMDG) in the same way as in Example 1, whereby it was 43 ppm by weight with respect to 100 wt% of diethylene glycol ethyl methyl ether (MEDG) and, further, was 34 ppm by weight with respect to the total resin composition.

Furthermore, the obtained resin composition was used to measure the resistivity of the ITO electrode and light transmittance in accordance with the above methods. The results are shown in Table 1.

### <<Comparative Example 3>>

When preparing a resin composition, except for changing the amount of use of diethylene glycol ethyl methyl ether (MEDG) (product name "Hysorb EDM", made by Toho Chemical Industry, content of diethylene glycol dimethyl ether (DMDG): 69 ppm by weight) from 745 parts to 706 parts and further mixing in a 40 parts of radiation-sensitive compound comprised of a condensate of 1,1,3-tris(2,5-dimethyl-4-hydroxyphenyl)-3-phenylpropane (1 mole) and 2.0 moles of 1,2-naphthoquinone diazide-5-sulfonic acid chloride (product name "TS-200", made by made by Toyogosei), the same procedure was followed as in Comparative Example 1 to prepare a resin composition of a solids concentration of 19.5 wt%.

Note that, the obtained resin composition was measured for content of diethylene glycol dimethyl ether (DMDG) in the same way as in Example 1, whereby it was 63 ppm by weight with respect to 100 wt% of diethylene glycol ethyl methyl ether (MEDG) and further was 51 ppm by weight with respect to the total resin composition.

Furthermore, the obtained resin composition was used to measure the resistivity of the ITO electrode and light transmittance in accordance with the above methods. The results are shown in Table 1.

### <<Comparative Example 4>>

When preparing a resin composition, except for changing the amount of use of diethylene glycol ethyl methyl ether (MEDG)(product name "Hysorb EDM-S", made by Toho Chemical Industry, content of diethylene glycol dimethyl ether (DMDG): 5 ppm by weight) from 745 parts to 600 parts and further mixing in 145 parts of diethylene glycol ethyl methyl ether (MEDG) (product name "Hysorb EDM", made by Toho Chemical Industry, content of diethylene glycol dimethyl ether (DMDG): 69 ppm by weight), the same procedure was followed as in Example 1 to prepare a resin composition with a solids concentration of 20 wt%.

Note that, the obtained resin composition was measured for content of diethylene glycol dimethyl ether (DMDG) in the same way as in Example 1, whereupon it was 17 ppm by weight with respect to 100 wt% of diethylene glycol ethyl methyl ether (MEDG) and further 15 ppm by weight with respect to the total resin composition.

Furthermore, the obtained resin composition was used to measure the resistivity of the ITO electrode and light transmittance according to the above methods. The results are shown in Table 1.

### Table 1

**Table 1**

| | | | Examples | | | | Comparative examples | | | |
|---|---|---|---|---|---|---|---|---|---|---|
| | | | 1 | 2 | 3 | 4 | 1 | 2 | 3 | 4 |
| MEDG used when producing cyclic olefin polymer (A-1) | Hysorb EDM-S | (parts) | 200 | 200 | 200 | 200 | - | 200 | | 200 |
| | (DMDG: 5 ppm by weight) | | | | | | | | - | |
| | Hysorb EDM | (parts) | - | - | - | - | 200 | - | 200 | |
| | (DMDG: 69 ppm by weight) | | | | | | | | | - |
| MEDG used when producing resin composition | Hysorb EDM-S | (parts) | 745 | 526 | 706 | 700 | - | - | - | 600 |
| | (DMDG: 5 ppm by weight) | | | | | | | | | |
| | Hysorb EDM | (parts) | - | - | - | 45 | 745 | 526 | 706 | 145 |
| | (DMDG: 69 ppm by weight) | | | | | | | | | |
| Presence of use of radiation-sensitive compound | | | No | No | Yes | No | No | No | Yes | No |
| Amount of DMDG in resin composition | Amount with respect to 100 wt% of MEDG | (ppm by weight) | 5.0 | 5.0 | 5.0 | 8.9 | 64 | 43 | 63 | 17 |
| | Amount with respect to total resin composition | (ppm by weight) | 4.3 | 4.0 | 4.0 | 7.5 | 54 | 34 | 51 | 15 |
| Evaluation | Resistivity of ITO electrode | (Ω) | 270 | 280 | 290 | 294 | 370 | 390 | 410 | 360 |
| | Light transmittance | (%) | 72 | 73 | 70 | 71 | 66 | 65 | 61 | 67 |

As shown in Table 1, in a resin composition containing a cyclic olefin polymer (A) having a protonic polar group, cross-linking agent (B), and organic solvent (C), if controlling the content of the diethylene glycol dimethyl ether (DMDG) to 10 ppm by weight or less with respect to 100 wt% of diethylene glycol ethyl methyl ether (MEDG), the obtained resin film can lower the resistivity of the ITO electrode formed when forming an ITO electrode on it. Further, it was high in light transmittance and excellent in transparency (Examples 1 to 4).

On the other hand, if making the content of diethylene glycol dimethyl ether (DMDG) over 10 ppm by weight with respect to 100 wt% of diethylene glycol ethyl methyl ether (MEDG), the obtained resin film becomes higher in resistivity of the ITO electrode formed when forming an ITO electrode on it. Further, it was low in light transmittance and inferior in transparency (Comparative Examples 1 to 4).

## Claims

1. A resin composition comprising a cyclic olefin polymer (A) having a protonic polar group, a cross-linking agent (B), and an organic solvent (C), wherein
the organic solvent (C) contains diethylene glycol ethyl methyl ether, and a content of diethylene glycol dimethyl ether contained in the organic solvent (C) is 10 ppm by weight or less when a content of the diethylene glycol ethyl methyl ether is 100 wt%.

2. The resin composition according to claim 1, wherein a content of the diethylene glycol dimethyl ether in the resin composition as a whole is 10 ppm by weight or less.

3. The resin composition according to claim 1 or 2, wherein the cross-linking agent (B) is an epoxy compound.

4. The resin composition according to any one of claims 1 to 3, further comprising a phenol-based antioxidant.

5. The resin composition according to any one of claims 1 to 4, further comprising a radiation-sensitive compound.

6. The resin film obtained using the resin composition according to any one of claims 1 to 5.

7. Use of a resin film according to claim 6 for making an electronic device.

## Patentansprüche

1. Eine Harzzusammensetzung, umfassend ein cyclisches Olefinpolymer (A) mit einer protonischen polaren Gruppe, ein Vernetzungsmittel (B) und ein organisches Lösungsmittel (C), wobei
das organische Lösungsmittel (C) Diethylenglykolethylmethylether enthält und ein Gehalt an Diethylenglykoldimethylether, der in dem organischen Lösungsmittel (C) enthalten ist, 10 Gewichts-ppm oder weniger beträgt, wenn ein Gehalt des Diethylenglykolethylmethylethers 100 Gewichts-% beträgt.

2. Die Harzzusammensetzung nach Anspruch 1, wobei ein Gehalt des Diethylenglykoldimethylethers in der Harzzusammensetzung als Ganzes 10 Gewichts-ppm oder weniger beträgt.

3. Die Harzzusammensetzung nach Anspruch 1 oder 2, wobei das Vernetzungsmittel (B) eine Epoxyverbindung ist.

4. Die Harzzusammensetzung nach einem der Ansprüche 1 bis 3, ferner umfassend ein Antioxidationsmittel auf Phenolbasis.

5. Die Harzzusammensetzung nach einem der Ansprüche 1 bis 4, ferner umfassend eine Strahlungs-empfindliche Verbindung.

6. Der Harzfilm, der unter Verwendung der Harzzusammensetzung nach einem der Ansprüche 1 bis 5 erhalten wurde.

7. Verwendung eines Harzfilms nach Anspruch 6 zur Herstellung einer elektronischen Vorrichtung.

## Revendications

1. Composition de résine comprenant un polymère d'oléfine cyclique (A) ayant un groupe polaire protonique, un agent de réticulation (B), et un solvant organique (C), dans laquelle le solvant organique (C) contient de l'éther éthylméthylique de diéthylèneglycol, et une teneur en éther diméthylique de diéthylèneglycol contenu dans le solvant organique (C) est de 10 ppm en poids ou moins quand une teneur en l'éther éthylméthylique de diéthylèneglycol est de 100 % en poids.

2. Composition de résine selon la revendication 1, dans laquelle une teneur en l'éther diméthylique de diéthylèneglycol dans la composition de résine dans son ensemble est de 10 ppm en poids ou moins.

3. Composition de résine selon la revendication 1 ou 2, dans laquelle l'agent de réticulation (B) est un composé époxy.

4. Composition de résine selon l'une quelconque des revendications 1 à 3, comprenant en outre un antioxydant à base de phénol.

5. Composition de résine selon l'une quelconque des revendications 1 à 4, comprenant en outre un composé sensible aux radiations.

6. Film de résine obtenu par utilisation de la composition de résine selon l'une quelconque des revendications 1 à 5.

7. Utilisation d'un film de résine selon la revendication 6 pour fabriquer un dispositif électronique.
